# FASCICULE DE BREVET EUROPEEN

(11) **EP 2 220 008 B1**
(45) Date de publication et mention de la délivrance du brevet: **07.03.2012**
(21) Numéro de dépôt: 08868154.9
(22) Date de dépôt: 18.12.2008
(51) Int. Cl.: C03C 19/00, B44C 1/22

(54) **PROCÉDÉ POUR LE DÉPOLISSAGE SÉLECTIF DE LA SURFACE D'UN ARTICLE EN VERRE**
VERFAHREN ZUR SELEKTIVEN ÄTZUNG DER OBERFLÄCHE EINES GLASARTIKELS
METHOD FOR THE SELECTIVE ETCHING OF THE SURFACE OF A GLASS ARTICLE

(30) Priorité: 20.12.2007 EP 07123746
(43) Date de publication de la demande: 25.08.2010
(73) Titulaire: AGC Flat Glass Europe SA, 1170 Bruxelles (Watermael-Boitsfort) (BE)
(72) Inventeur: SCARSO, Florent, B-6040 Jumet (BE); JACOBS, Nadia, B-6040 Jumet (BE)
(74) Mandataire: Verbrugge, Vivien François Emeric
(86) Numéro de dépôt international: PCT/EP2008/067828
(87) Numéro de publication internationale: WO 2009/083468

(56) Documents cités:
- WO-A-2006/087320
- DE-C- 926 625
- DE-C1- 19 948 917
- DATABASE WPI Week 198003 Thomson Scientific, London, GB; AN 1980-04118C XP002480277 & JP 54 152294 A (SAKATA SHOKAI KK) 30 novembre 1979 (1979-11-30)

## Description

Cette invention concerne le dépolissage sélectif du verre. En particulier, elle concerne le dépolissage sélectif de la surface d'un article en verre par sablage.

Les méthodes de dépolissage sélectif en général, permettant d'obtenir un motif particulier sur la surface d'un article en verre, sont nombreuses. Ces méthodes décrivent essentiellement l'utilisation d'un masque protecteur, ou couche protectrice, exposant au traitement de dépolissage choisi, en particulier le sablage ou l'attaque acide, certaines parties de la surface de l'article en verre.

Une pratique conventionnelle pour le dépolissage sélectif de la surface d'un article en verre, en particulier pour le sablage, est d'utiliser un masque protecteur constitué de ruban adhésif résistant au traitement abrasif, appliqué manuellement pour chaque article en verre sur les zones qui ne doivent pas subir le dépolissage. Cette technique présente plusieurs inconvénients. En plus d'être longue et fastidieuse à mettre en oeuvre, elle ne permet pas l'obtention d'un même motif sur différents articles en verre avec une bonne reproductibilité et elle génère des motifs dont les contours manquent de netteté. Elle ne permet pas non plus l'obtention, sur la surface de l'article en verre, de motifs fins.

Afin de pallier à certains inconvénients de la technique conventionnelle de sablage sélectif, plusieurs techniques alternatives ont vu jour. Celles-ci utilisent un masque protecteur formé au départ d'une composition liquide photopolymérisable. Un tel masque, préparé au préalable par irradiation sélective, présente malheureusement une mauvaise adhérence à la surface de l'article en verre et afin de pallier à cet inconvénient, de nombreuses solutions ont été développées. Cependant, quels que soient les différents développements proposés afin d'améliorer ces techniques, les étapes requises sont toujours très nombreuses et rendent ces techniques longues et compliquées à mettre en oeuvre. Elles permettent néanmoins l'obtention de contours plus nets que par l'utilisation de ruban adhésif comme masque protecteur.

Une autre méthode a été développée pour le dépolissage sélectif de la surface d'un article en verre, en particulier pour le matage par l'action d'une solution d'acide fluorhydrique. Celle-ci est décrite dans la demande de brevet WO2006/087320A1 et consiste en l'utilisation d'un masque protecteur qui est un revêtement de cire à bas point de fusion. En particulier, la cire est déposée sur la surface d'un article en verre au moyen d'au moins une tête à jet d'encre qui fond la cire. Cette méthode présente l'avantage de pouvoir mater sélectivement, de façon automatisée, rapide, et reproductible, des articles en verre de grande surface. La netteté des contours des motifs obtenus par cette voie pourrait cependant encore être améliorée.

D'autres méthodes de matage sélectif à l'acide exploitent également l'application de cire fondue sur les parties à protéger de la surface de l'article en verre, en particulier par sérigraphie ou par un applicateur à chaud. Ces méthodes, contrairement à la précédente, ne peuvent être mises en oeuvre de façon reproductible que pour des petites surfaces.

L'invention a pour but de fournir une méthode de dépolissage sélectif par sablage, facile à mettre en oeuvre et qui permet une bonne reproductibilité des motifs sur la surface d'un article en verre ainsi qu'une grande netteté des contours de ces motifs. L'invention, qui utilise le sablage comme moyen de dépolissage, permet également de s'affranchir des inconvénients de l'attaque acide liés à l'utilisation de produits acides dangereux et permet l'obtention d'un motif présentant un toucher et un contraste différents de ceux obtenus par attaque acide.

En particulier, l'invention concerne un procédé pour le dépolissage sélectif de la surface d'au moins un article en verre comprenant les étapes successives suivantes :
a) une étape de protection durant laquelle au moins une partie de la surface qui ne doit pas être dépolie est protégée par le dépôt d'une couche protectrice afin que la surface de l'article en verre soit revêtue de façon sélective,
b) une étape de dépolissement durant laquelle les parties de la surface non revêtues par la couche protectrice sont dépolies,
c) une étape de finissage qui consiste à nettoyer la surface de l'article en verre en éliminant la couche protectrice,
selon lequel la couche protectrice est un revêtement de cire à bas point de fusion qui est déposé sélectivement sur des parties de la surface de l'article en verre au cours de l'étape de protection, l'étape de dépolissement est réalisée mécaniquement par sablage sous pression et l'élimination de la couche protectrice durant l'étape de nettoyage est effectuée par projection d'une solution chaude sur la surface de l'article en verre.

Par surface d'un article en verre, on désigne la surface externe, de nature plane ou non, d'un article en verre. Le procédé selon l'invention est utilisé de préférence pour des surfaces planes, en particulier pour des feuilles de verre. Ce procédé est particulièrement adapté pour des feuilles de verres produites par le procédé de production par flottage du verre.

Le procédé selon l'invention est utilisé pour le dépolissage de la surface d'un article en verre. Par dépolissage de la surface d'un article en verre, on entend l'opacification d'au moins une partie de la surface de l'article en verre par élimination d'une certaine quantité de matière sur le dessus de la surface de l'article en verre. Le dépolissage peut aussi induire la création d'une texturation particulière à la surface de l'article en verre. Ladite surface du verre peut être indifféremment claire ou préalablement dépolie. Selon le procédé de l'invention, le dépolissage est réalisé de manière sélective sur certaines parties de la surface de l'article en verre, laissant intactes les parties restantes.

Selon l'invention, le procédé comprend trois étapes successives réalisées selon la séquence suivante : une étape de protection, une étape de dépolissage et une étape de finissage.

Durant la première étape du procédé, ou étape de protection, au moins une partie de la surface de l'article en verre qui ne doit pas être matée est protégée par le dépôt d'une couche protectrice afin que la surface de l'article en verre soit revêtue de façon sélective. Selon l'invention, la couche protectrice est un revêtement de cire à bas point de fusion qui est déposée sélectivement, sous forme fondue, sur certaines parties de la surface de l'article en verre, grâce à un moyen de distribution. La cire fondue déposée sur la surface de l'article en verre se solidifie alors rapidement et forme une couche protectrice solide.

La cire qui peut être utilisée dans le procédé selon l'invention peut être d'origine naturelle ou synthétique. Lorsqu'elle est d'origine naturelle, la cire peut appartenir à la catégorie des cires animales, végétales ou minérales. Les cires minérales issues du pétrole sont préférées et plus particulièrement, les paraffines et les cires microcristallines. Les cires de paraffine consistent principalement en des chaînes hydrocarbonées linéaires. Elles comportent principalement de la paraffine normale (80 à 90%), et dans une moindre mesure, des paraffines ramifiées ainsi que des cycloparaffines. Lorsque la cire est d'origine synthétique, elle peut appartenir aux composés hydrocarbonés obtenus par reformage, aux composés naphtaléniques halogénés et aux polymères éthyléniques. De préférence, les cires d'origine synthétique sont des polymères éthyléniques. Un exemple de cire synthétique bien adaptée à l'invention est un polyéthylène basse densité. Le polyéthylène peut avoir une masse moléculaire allant de 300 à 10000. De préférence, le polyéthylène a une masse moléculaire allant de 500 à 5000, et de manière plus préférée, de 600 à 900. Des mélanges comprenant au moins une cire d'origine naturelle et/ou synthétique particulière dans n'importe quelles proportions peuvent aussi être utilisés.

De manière préférée, la cire obéissant au procédé selon l'invention présente un point de fusion de 50 à 140°C. De manière encore plus préférée, la cire a un point de fusion d'au moins 60°C. La cire a également un point de fusion de 95°C au plus.

Lorsqu'elle est à l'état fondu à 100°C, la cire utilisée a de préférence une viscosité dynamique à cette température de 5 à 30 mPa.s. De préférence, la cire a une viscosité dynamique à 100°C d'au moins 10 mPa.s. La cire a également, de préférence, une viscosité dynamique à 100°C d'au maximum 20 mPa.

Selon l'invention, au cours de l'étape de protection, le revêtement de cire peut être déposé sélectivement sur la surface de l'article en verre par trois moyens différents : par distribution au moyen d'au moins une tête à jet d'encre, par sérigraphie ou par un applicateur à chaud.

Selon l'invention, au cours de l'étape de protection, le dépôt sélectif du revêtement de cire peut être réalisé au moyen d'au moins un système de distribution de la cire comportant au moins une tête à jet d'encre qui fond la cire. Un système de transport mobile permet de positionner cette dernière sur n'importe quel point situé le long d'au moins une direction comprise au sein de la surface de l'article en verre. Dans certains de ces systèmes de distribution de la cire en particulier, le système de transport peut aussi positionner la tête à jet d'encre le long de plus d'une direction comprise au sein de la surface, permettant à la tête de recouvrir l'entièreté de la surface à elle seule, sans nécessiter de mouvement de l'article en verre.

Selon l'invention, la tête à jet d'encre peut comprendre une rangée de petites buses capables d'éjecter la cire fondue. Selon le motif à créer sur la surface de l'article en verre, chaque buse peut être déclenchée séparément ou toutes les buses peuvent être déclenchées ensemble.

Pour un point donné de la surface de l'article en verre à protéger, l'étape de protection comprend au moins une excursion de la tête à jet d'encre. En d'autres mots, durant l'étape de protection, la tête à jet d'encre entre en mouvement et fournit au moins une fois, à un endroit particulier de la surface de l'article en verre à protéger, de la cire fondue.

Avantageusement, à un endroit particulier de la surface de l'article en verre à protéger, la tête à jet d'encre peut effectuer deux ou trois excursions successives, et de préférence trois excursions successives, pour déposer la cire fondue, afin d'épaissir la couche protectrice sur la surface de l'article en verre.

De préférence, la tête à jet d'encre mobile est positionnée de manière légèrement différente à chaque excursion de façon à générer un chevauchement des rubans de cire et ainsi remplir d'éventuels vides laissés entre les rubans.

Le procédé selon l'invention qui utilise un système de distribution de la cire comportant au moins une tête à jet d'encre est particulièrement bien adapté au dépolissage sélectif de larges surfaces d'article en verre. De préférence, la surface du verre est d'au moins 5 m². Il est entendu que le procédé selon l'invention qui utilise un système de distribution de la cire comportant au moins une tête à jet d'encre peut également être utilisé aisément pour le dépolissage sélectif de plus petites surfaces, par exemple des surfaces de l'ordre de 0,5 m².

Selon l'invention, au cours de l'étape de protection, le dépôt sélectif du revêtement de cire sur la surface de l'article en verre peut également être réalisé par sérigraphie, au cours de laquelle on utilise un écran composé d'un tissu synthétique tendu sur un cadre métallique. Cet écran, aussi appelé cliché, est ensuite posé sur la surface de l'article en verre destiné à être protégé sélectivement par un revêtement de cire. Ce cliché est généralement obtenu par une méthode photo-mécanique directe de telle façon que les mailles du tissu soient obturées au niveau des parties de la surface de l'article en verre qui ne doivent pas être protégées par la cire et ouvertes au niveau des parties de la surface qui doivent être protégées et donc être revêtues de cire.

Selon l'invention, au cours de l'étape de protection, le dépôt sélectif du revêtement de cire sur la surface de l'article en verre peut également être réalisé au moyen d'un applicateur à chaud. Celui-ci est constitué a) d'un réservoir de cire fondue et b) d'une ou de plusieurs têtes d'application alignées, connectées au réservoir et situées au dessus de la surface de l'article en verre à protéger. L'applicateur délivre, via la ou les têtes d'application chauffées, un ruban de cire fondue sous faible pression au moyen d'une arrivée d'air comprimé. La pression de l'air comprimé est généralement comprise entre 0,1 et 1 MPa. De préférence, la pression de l'air comprimé sera d'au moins 0.2 MPa. Elle sera également de préférence d'au plus 0,6 MPa. Lorsque l'applicateur comporte plusieurs têtes d'application, l'utilisation optionnelle de cales d'épaisseur permet de régler la largeur du ruban de cire déposé par les têtes d'application sur la surface de l'article de verre.

Le procédé selon l'invention qui utilise soit la sérigraphie, soit un applicateur à chaud n'est pas adapté au dépolissage sélectif de larges surfaces d'article en verre. De préférence, ces deux moyens de dépôt de la couche protectrice de cire sont réservés aux surfaces de verre de l'ordre de 0,5 m².

Durant la seconde étape du procédé, ou étape de dépolissage, les parties de la surface de l'article en verre non revêtues par la couche protectrice de cire sont dépolies par l'élimination de matière. Selon l'invention, l'enlèvement de matière est réalisé par action mécanique via un procédé de sablage qui consiste à projeter à grande vitesse des grains d'un matériau abrasif sur la surface de l'article en verre. La projection des grains à grande vitesse est permise grâce à l'utilisation d'un gaz comprimé ou ventilé. Le gaz utilisé est, par exemple, de l'air sec. Le sablage, selon l'invention, peut être réalisé en utilisant soit une machine à pistolet manuel, soit une chambre de sablage automatisée constituée d'un convoyeur faisant défiler la feuille de verre à une vitesse constante, et d'un ou plusieurs systèmes consécutifs d'apport du matériau abrasif. La chambre de sablage automatisée est utilisée de manière préférée.

Avantageusement, les grains du matériau abrasif utilisés dans le procédé selon l'invention sont de nature angulaire afin de permettre l'érosion de matière à la surface de l'article en verre et d'obtenir le dépolissage. Le matériau abrasif est choisi parmi le sable naturel, les sables synthétiques, le corindon, l'hématite, le grenat et le carbure de silicium. De préférence, le sable naturel est utilisé.

De manière préférée, les grains du matériau abrasif utilisé dans le procédé selon l'invention présentent un diamètre équivalent de 1 mm à 0,05 mm. De manière plus préférée, le diamètre moyen équivalent est d'au moins 0,1 mm. Ce diamètre moyen équivalent est également, de manière plus préférée, de 0,8 mm au plus. On entend par diamètre équivalent, le diamètre de la sphère possédant le même volume que le grain du matériau abrasif. Puisque les grains de matériau abrasif ne possèdent pas tous la même taille, on parle de diamètre moyen équivalent qui correspond au mode, c'est-à-dire à la valeur maximale, dans la courbe de distribution des diamètres équivalents.

Avantageusement, le sablage selon l'invention réalisé avec une chambre de sablage est réalisé avec une vitesse de la feuille de verre allant de 3,5 à 12 mètres par minute.

La troisième étape du procédé selon l'invention, ou étape de finissage, consiste à nettoyer la surface de l'article en verre en éliminant la couche protectrice de cire. Avantageusement, l'élimination de la couche protectrice est réalisée par projection d'une solution chaude qui permettra d'entraîner la fusion de la cire. La solution est indifféremment de nature aqueuse ou organique. Une solution aqueuse est utilisée préférentiellement. De façon facultative, la solution chaude peut comprendre au moins un détergent et/ou un solvant organique afin d'aider à émulsifier et éliminer la couche protectrice de cire.

De préférence, la projection de la solution chaude sera réalisée au moyen d'au moins un jet de solution chaude sous pression dirigé sur la surface de l'article en verre ou au moyen d'un rideau couvrant l'entièreté de la surface de l'article en verre grâce à la formation d'un écran de solution chaude.

Le procédé complet, constitué des trois étapes selon l'invention, peut être réalisé une seule fois. Il peut aussi être répété un certain nombre de fois jusqu'à atteindre la surface désirée. Ce mode de réalisation peut ainsi être utilisé afin de moduler le dépolissage de l'entièreté des motifs formés sur la surface de l'article en verre, et dès lors obtenir un dépolissage homogène pour les différents motifs. Ce mode de réalisation peut être également utilisé afin d'obtenir un dépolissage hétérogène ou, en d'autre mots, afin de générer des intensités de dépolissage différentes d'un motif à l'autre sur la surface de l'article en verre. Dans ce mode de réalisation de l'invention, des cycles de répétition du procédé entier peuvent utiliser exactement le même procédé à chaque répétition. Les conditions opératoires peuvent aussi être adaptées d'une répétition à l'autre. Un autre mode de réalisation de l'invention consiste à répéter la seconde étape, ou étape de dépolissage en particulier, dans un seul ou plusieurs cycles de répétition du procédé.

L'invention concerne aussi un article en verre dépoli par le procédé complet décrit ci-dessus.

Les quelques exemples qui suivent illustrent l'invention, sans intention de limiter de quelque façon sa couverture.

### Exemple 1 (conforme à l'invention)

Une feuille de verre clair de 4 mm d'épaisseur, de 1,61 m de largeur et de 3,21 m de longueur a été lavée avec un détergent aqueux, puis rincée soigneusement avec de l'eau et finalement séchée.

Une couche protectrice faite de paraffine microcristalline constituée de chaînes hydrocarbonées ramifiées (Paramelt, HG grade, point de fusion : 80 - 86 °C) a été déposée sélectivement sur certaines parties de la surface de l'article en verre représentant une image composée de carrés, grâce à trois excursions successives d'une tête à jet d'encre comprenant 256 gicleurs agencés sur une ligne droite. La tête à jet d'encre a été portée à 110°C et a réalisé l'éjection de la cire à 18000 Hz. L'épaisseur de la couche protectrice ainsi obtenue était de 20 à 70 µm, chaque ruban de cire formé ayant une largeur de 80 à 150 µm, et les rubans contigus se chevauchant légèrement dans le but d'éliminer tout vide éventuel.

Le sablage a ensuite été réalisé grâce à une chambre de sablage automatisée possédant un convoyeur et deux systèmes consécutifs d'apport de sable. Entre d'autres mots, cette chambre de sablage permet de réalise deux sablages consécutifs de la feuille de verre défilant sur le convoyeur. La feuille de verre a défilé à une vitesse de 9,5 mètres par minute. Le sable a été projeté sur la surface de la feuille de verre au moyen d'un système à air ventilé. La pression de l'air ventilé a été réglée à 5,5 kPa. Le matériau abrasif qui a été utilisé est un sable naturel dont le diamètre équivalent des grains est de 0,25 mm. La feuille de verre est passée quatre fois sur le convoyeur au travers de la chambre de sablage.

La couche de paraffine a finalement été éliminée avec un jet d'eau chaude sous pression.

### Exemple 2 (exemple comparatif, non conforme à l'invention)

Une feuille de verre clair de 4 mm d'épaisseur et d'une surface de 7,7 m² (2,4 m x 3,21 m) a été lavée avec un détergent aqueux, puis rincée soigneusement avec de l'eau et finalement séchée.

Une couche protectrice faite de paraffine microcristalline constituée de chaînes hydrocarbonées ramifiées (Paramelt, HG grade, point de fusion : 80 - 86 °C) a été déposée sélectivement sur certaines parties de la surface de l'article en verre représentant une image composée de carrés, grâce à trois excursions successives d'une tête à jet d'encre comprenant 256 gicleurs agencés sur une ligne droite. La tête à jet d'encre a été portée à 110°C et a réalisé l'éjection de la cire à 18000 Hz. L'épaisseur de la couche protectrice ainsi obtenue était de 20 à 70 µm, chaque ruban de cire formé ayant une largeur de 80 à 150 µm, et les rubans contigus se chevauchant légèrement dans le but d'éliminer tout vide éventuel.

Une solution d'attaque acide, composée de 20% en masse de HF et de 62% en masse de NH₄HF₂ dans l'eau à 20 - 25 °C, a ensuite été déposée sur l'entièreté de la surface de l'article en verre protégée sélectivement et le contact entre le verre et la solution d'attaque a été maintenu pendant 5 minutes.

La solution d'attaque a ensuite été rincée avec de l'eau et la couche de paraffine a été ensuite éliminée avec des jets d'eau chaude. Finalement, un nettoyage de la surface avec un détergent aqueux a été réalisé.

## Revendications

1. Procédé pour le dépolissage sélectif de la surface d'au moins un article en verre comprenant les étapes successives suivantes :
a) une étape de protection durant laquelle au moins une partie de la surface qui ne doit pas être dépolie est protégée par le dépôt d'une couche protectrice afin que la surface de l'article en verre soit revêtue de façon sélective,
b) une étape de dépolissement durant laquelle les parties de la surface non revêtues par la couche protectrice sont dépolies,
c) une étape de finissage qui consiste à nettoyer la surface de l'article en verre en éliminant la couche protectrice,
**caractérisé en ce que** la couche protectrice est un revêtement de cire à bas point de fusion qui est déposé sélectivement au moyen d'au moins un système de distribution qui comprend au moins une tête à jet d'encre sur des parties de la surface de l'article en verre au cours de l'étape de protection, **en ce que** l'étape de dépolissement est réalisée mécaniquement par sablage sous pression et **en ce que** l'élimination de la couche protectrice durant l'étape de nettoyage est effectuée par projection d'une solution chaude sur la surface de l'article en verre.

2. Procédé selon la revendication 1, **caractérisé en ce que** la surface de l'article en verre est d'au moins 5 m².

3. Procédé selon l'une quelconque des revendications précédentes, **caractérisé en ce que** l'étape de protection comprend pour un point donné de la surface de l'article en verre à protéger au moins une excursion de la tête à jet d'encre.

4. Procédé selon la revendication 3, **caractérisé en ce que** l'étape de protection comprend pour un point donné de la surface de l'article en verre à protéger trois excursions successives de la tête à jet d'encre.

5. Procédé selon la revendication 4, **caractérisé en ce que** la tête à jet d'encre est positionnée de manière légèrement différente à chaque excursion de façon à remplir des vides éventuels laissés entre les rubans de cire déjà déposés.

6. Procédé selon l'une quelconque des revendications précédentes, **caractérisé en ce que** la cire est sélectionnée parmi les mélanges comprenant au moins une cire d'origine naturelle et/ou synthétique dans n'importe quelles proportions.

7. Procédé selon la revendication 6, **caractérisé en ce que** la cire d'origine naturelle est sélectionnée parmi des cires minérales issues du pétrole telles que les paraffines et les cires microcristallines.

8. Procédé selon la revendication 6, **caractérisé en ce que** la cire d'origine synthétique est sélectionnée parmi les polymères éthyléniques tels que le polyéthylène.

9. Procédé selon l'une des revendications précédentes, **caractérisé en ce que** le point de fusion de la cire est de 50 et 140°C.

10. Procédé selon l'une quelconque des revendications précédentes, **caractérisé en ce que** la cire fondue a une viscosité dynamique à 100°C de 5 à 30 mPa.s.

11. Procédé selon l'une quelconque des revendications précédentes, **caractérisé en ce que** l'étape de dépolissage consiste à projeter sous pression des grains d'un matériau abrasif en utilisant une chambre de sablage automatisée munie d'un convoyeur ou une machine à pistolet manuel.

12. Procédé selon la revendication 11, **caractérisé en ce que** l'étape de dépolissage consiste à projeter sous pression des grains d'un matériau abrasif en utilisant une chambre de sablage automatisée munie d'un convoyeur.

13. Procédé selon la revendication 12, **caractérisé en ce que** le sablage est réalisé avec une vitesse de la feuille de verre allant de 3,5 à 12 mètres par minute.

14. Procédé selon les revendications 11 à 13, **caractérisé en ce que** le matériau abrasif est choisi parmi les sables naturels, les sables synthétiques, le corindon, l'hématite, le grenat et le carbure de silicium.

15. Procédé selon l'une quelconque des revendications 11 à 14, **caractérisé en ce que** les grains du matériau abrasif ont un diamètre équivalent moyen allant de 0,05 à 1 mm.

16. Procédé selon l'une des revendications précédentes, **caractérisé en ce que** la solution chaude comporte au moins un détergent aqueux et/ou un solvant organique.

## Claims

1. Process for selectively matting the surface of at least one glass article comprising the following successive steps:
a) a protection step during which at least a part of the surface that is not to be matted is protected by depositing a protective layer so that the surface of the glass article is coated selectively,
b) an matting step during which the parts of the surface that are not coated by the protective layer are matted,
c) a finishing step that consists of cleaning the surface of the glass article while removing the protective layer,
**characterised in that** the protective layer is a coating of wax with a low melting point, which is selectively deposited onto parts of the surface of the glass article by means of at least one distribution system comprising at least one inkjet head during the protection step, **in that** the matting step is performed mechanically by sandblasting under pressure, and **in that** the removal of the protective layer during the cleaning step is conducted by spraying a hot solution onto the surface of the glass article.

2. Process according to claim 1, **characterised in that** the surface area of the glass article is at least 5 m².

3. Process according to any one of the preceding claims, **characterised in that** the protection step comprises protecting at least one passage of the inkjet head for a given point of the surface of the glass article.

4. Process according to claim 3, **characterised in that** the protection step comprises protecting three successive passages of the inkjet head for a given point of the surface of the glass article.

5. Process according to claim 4, **characterised in that** the inkjet head is positioned in a slightly different manner on each passage in order to fill any gaps between the strips of wax already deposited.

6. Process according to any one of the preceding claims, **characterised in that** the wax is selected from mixtures containing at least one wax of natural and/or synthetic origin in any proportions.

7. Process according to claim 6, **characterised in that** the wax of natural origin is selected from mineral waxes produced from petroleum such as paraffins and microcrystalline waxes.

8. Process according to claim 6, **characterised in that** the wax of synthetic origin is selected from ethylene polymers such as polyethylene.

9. Process according to one of the preceding claims, **characterised in that** the melting point of the wax ranges from 50° to 140°C.

10. Process according to any one of the preceding claims, **characterised in that** the melted wax has a dynamic viscosity at 100°C of 5 to 30 mPa.s.

11. Process according to any one of the preceding claims, **characterised in that** the matting step consists of spraying particles of an abrasive material under pressure using an automated sandblasting chamber equipped with a conveyor or a manual spray gun device.

12. Process according to claim 11, **characterised in that** the matting step consists of spraying particles of an abrasive material under pressure using an automated sandblasting chamber equipped with a conveyor.

13. Process according to claim 12, **characterised in that** the sandblasting is conducted with a speed of the glass sheet ranging from 3.5 to 12 metres per minute.

14. Process according to claims 11 to 13, **characterised in that** the abrasive material is selected from natural sands, synthetic sands, corundum, hematite, garnet and silicon carbide.

15. Process according to any one of claims 11 to 14, **characterised in that** the particles of abrasive material have an average equivalent diameter ranging from 0.05 to 1 mm.

16. Process according to one of the preceding claims, **characterised in that** the hot solution contains at least one aqueous detergent and/or an organic solvent.

## Patentansprüche

1. Verfahren zum selektiven Mattieren der Oberfläche zumindest eines Glasartikels, umfassend die nachstehenden aufeinanderfolgenden Schritte:
(a) einen Schutzschritt, während dem zumindest ein Abschnitt der Oberfläche, der nicht zu mattieren ist, durch das Aufbringen einer Schutzschicht geschützt wird, so dass die Oberfläche des Glasartikels selektiv abgedeckt bzw. beschichtet wird,
(b) einen Mattierungsschritt, während dem die Abschnitte der Oberfläche, die nicht durch die Schutzschicht abgedeckt sind, mattiert werden,
(c) einen Endbearbeitungs- bzw. Fertigstellungsschritt, der darin besteht, die Oberfläche des Glasartikels durch Entfernen der Schutzschicht zu säubern,
**dadurch gekennzeichnet, dass** die Schutzschicht eine Beschichtung aus Wachs mit niedrigem Schmelzpunkt ist, die selektiv mittels zumindest eines Verteilungssystems, das zumindest einen Farb- bzw. Tintenstrahlkopf umfasst, auf den Abschnitten der Oberfläche des Glasartikels im Verlauf des Schutzschritts aufgebracht wird, dass der Mattierungsschritt mechanisch durch Sandstrahlen unter Druck realisiert wird und dass das Entfernen der Schutzschicht während des Säuberungsschritts durch Ausstoßung einer warmen Lösung auf die Oberfläche des Glasartikels ausgeführt wird.

2. Verfahren nach Anspruch 1, **dadurch gekennzeichnet, dass** die Oberfläche des Glasartikels zumindest 5 m² ist.

3. Verfahren nach einem der vorhergehenden Ansprüche, **dadurch gekennzeichnet, dass** der Schutzschritt für einen zu schützenden, vorgegebenen Punkt der Oberfläche des Glasartikels zumindest eine Auslenkung bzw. Abweichung des Tintenstrahlkopfes umfasst.

4. Verfahren nach Anspruch 3, **dadurch gekennzeichnet, dass** der Schutzschritt für einen zu schützenden, vorgegebenen Punkt der Oberfläche des Glasartikels drei aufeinanderfolgende Auslenkungen bzw. Abweichungen des Tintenstrahlkopfs umfasst.

5. Verfahren nach Anspruch 4, **dadurch gekennzeichnet, dass** der Tintenstralkopf bei jeder Abweichung leicht unterschiedlich positioniert wird, um eventuelle, zwischen den bereits aufgebrachten Wachsbändern belassene Zwischenräume zu füllen.

6. Verfahren nach einem der vorhergehenden Ansprüche, **dadurch gekennzeichnet, dass** das Wachs aus Mischungen ausgewählt wird, die zumindest ein natürliches und/oder ein synthetisches Wachs in beliebigen Anteilen enthalten.

7. Verfahren nach Anspruch 6, **dadurch gekennzeichnet, dass** das natürliche Wachs aus mineralischen Wachsen ausgewählt wird, die aus Erdöl stammen, wie beispielsweise Paraffine und mikrokristalline Wachse.

8. Verfahren nach Anspruch 6, **dadurch gekennzeichnet, dass** das synthetische Wachs aus ethylenischen Polymereren ausgewählt wird, wie beispielsweise Polyethylen.

9. Verfahren nach einem der vorhergehenden Ansprüche, **dadurch gekennzeichnet, dass** der Schmelzpunkt des Wachses zwischen 50 und 140°C liegt.

10. Verfahren nach einem der vorhergehenden Ansprüche, **dadurch gekennzeichnet, dass** das geschmolzene Wachs bei 100°C eine dynamische Viskosität von 5 bis 30 mPa·s aufweist.

11. Verfahren nach einem der vorhergehenden Ansprüche, **dadurch gekennzeichnet, dass** der Mattierungsschritt darin besteht, unter Druck Körner eines abrasiven Materials unter Verwendung einer automatisierten Sandstrahlkammer auszustoßen, die mit einem Förderer oder einer Maschine mit manueller Pistole versehen ist.

12. Verfahren nach Anspruch 11, **dadurch gekennzeichnet, dass** der Mattierungsschritt darin besteht, unter Druck Körner eines abrasiven Materials unter Verwendung einer automatisierten Sandstrahlkammer auszustoßen, die mit einem Förderer versehen ist.

13. Verfahren nach Anspruch 12, **dadurch gekennzeichnet, dass** das Sandstrahlen mit einer Geschwindigkeit der Glasplatte von 3,5 bis 12 Metern pro Minute realisiert wird.

14. Verfahren nach den Ansprüchen 11 bis 13, **dadurch gekennzeichnet, dass** das abrasive Material aus natürlichem Sand, synthetischem Sand, Korund, Hämatit, Granat und Siliziumcarbid ausgewählt wird.

15. Verfahren nach einem der Ansprüche 11 bis 14, **dadurch gekennzeichnet, dass** die Körner des abrasiven Materials einen mittleren äquivalenten Durchmesser von 0,05 bis 1 mm aufweisen.

16. Verfahren nach einem der vorhergehenden Ansprüche, **dadurch gekennzeichnet, dass** die warme Lösung zumindest ein wässriges Detergens und/oder ein organisches Lösungsmittel enthält.
